# FASCICULE DE BREVET EUROPEEN

(11) **EP 0 331 554 B1**
(45) Date de publication et mention de la délivrance du brevet: **28.07.1993**
(21) Numéro de dépôt: 89400466.2
(22) Date de dépôt: 20.02.1989
(51) Int. Cl.: C08L 57/04, C08L 77/00, C08L 67/02, C08L 23/12, C08K 5/35, C08L 35/00

(54) **Composition permettant de rendre compatibles au moins deux polymères thermoplastiques incompatibles, son application à la fabrication d'alliages thermoplastiques, alliages thermoplastiques obtenus**
Zusammensetzung, die wenigstens zwei unverträgliche thermoplastische Polymere verträglich machen kann, ihre Anwendung zur Herstellung von thermoplastischen Legierungen und so erhaltene thermoplastische Legierungen
Composition, which permits to make compatible at least two incompatible thermoplastic polymers, its application for the fabrication of thermoplastic alloys and thermoplastic alloys obtained

(30) Priorité: 04.03.1988 FR 8802809
(43) Date de publication de la demande: 06.09.1989
(73) Titulaire: ELF ATOCHEM S.A., 92800 Puteaux (FR)
(72) Inventeur: Parsy, Roland, c/o Résidence Hélène Boucher, F-76600 Le Havre (FR); Rivas, Nadine, F-27670 St Ouen du Tilleul (FR)
(74) Mandataire: Rochet, Michel

(56) Documents cités:
- EP-A- 0 044 616
- EP-A- 0 188 123
- EP-A- 0 194 705
- EP-A- 0 258 040
- EP-A- 0 295 103
- WO-A-85/02858
- WO-A-87/05304
- GB-A- 1 440 030
- PATENT ABSTRACTS OF JAPAN vol 5, no 71 (C-54)(743), 13 mai 1981
- PATENT ABSTRACTS OF JAPAN vol 5, no 106 (C-62)(778), 10 juillet 1981
- PATENT ABSTRACTS OF JAPAN vol 5, no 24 (C-43)(696), 13 février 1981

## Description

La présente invention concerne une composition permettant de rendre compatibles au moins deux polymères thermoplastiques incompatibles dont un contient dans sa molécule des fonctions carboxyliques. Cette composition est formée d'un polymère maléisé compatible avec au moins l'un des polymères qui ne possèdent pas de fonction carboxylique et d'une bisoxazoline, nom générique des oxazoles hydrogénés, ou d'une bisoxazine hydrogénée.

La formule générale des cycles oxazoles hydrogénés est 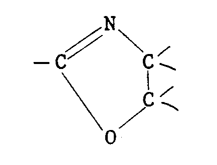
celle de la bisoxazine hydrogénée est : 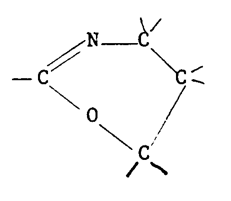
L' invention concerne également l'application consistant à associer la composition à au moins deux polymères thermoplastiques incompatibles dont au moins un contient dans sa molécule des fonctions carboxyliques et au moins un n'en contient pas.

L'invention concerne enfin les différents alliages de polymères thermoplastiques rendus compatibles en mélange par association avec la composition.

Il est connu de rendre compatibles, dans certains types de mélanges spécifiques, deux polymères incompatibles en leur associant un tiers polymère, éventuellement séquencé ou greffé, partiellement compatible avec l'un et l'autre des polymères. Il est également connu de provoquer ce séquençage ou ce greffage in situ lors du mélangeage. C'est le cas par exemple du mélange polypropylène-polyamide 6 rendus compatibles par du polypropylène maléisé. L'avantage de cette technique est de ne pas nécessiter un séquençage préalable. Toutefois elle présente l'inconvénient de ne pas être suffisamment efficace dans tous les cas et en particulier pour les mélanges polypropylène-polyesters aromatiques.

La composition selon l'invention permet d'accroître l'efficacité de tels agents de compatibilité.

La composition selon l'invention est constituée de l'association des deux constituants suivants :
1 - un copolymère, greffé ou statistique, compatible avec au moins un des polymères, contenant dans sa molécule le reste d'au moins un des monomères de formules suivantes :
   a) 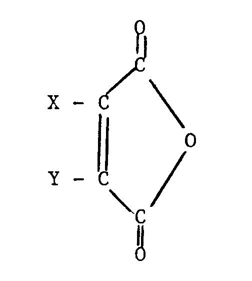 dans laquelle X et Y sont soit un proton, soit une chaine contenant de 1 à 8 atomes de carbone, étant entendu que l'un des deux est un proton
   b) 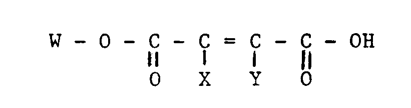 dans laquelle W est soit un proton, soit une chaine alkyle, linéaire ou ramifiée contenant de 1 à 10 atomes de carbone
   c) 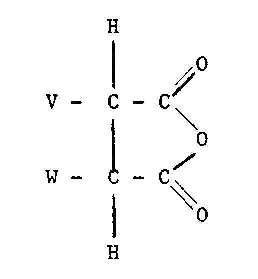 dans laquelle W est tel que défini précédemment et V est un groupement hydrocarboné, linéaire ou ramifié, contenant de 2 à 12 atomes de carbone et contenant une insaturation éthylénique
2 - Un composé de formule : 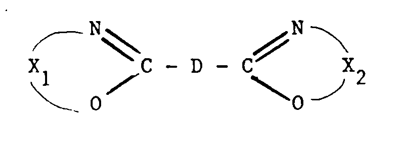 dans laquelle D est soit zéro, soit une chaine alkyle, contenant éventuellement au moins un cycle aromatique et/ou au moins un atome oxygène, d'azote, de soufre, d'halogène, ladite chaine étant telle que le diacide correspondant 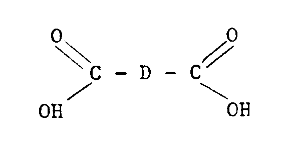 possède un pka inférieur à 4,5 et mieux inférieur ou égal à 3,5
   X₁ et X₂, identiques ou différents, représentent une chaine hydrocarbonée non réactive avec les autres constituants contenant de 2 ou 3 atomes de carbone dans le cycle imino-éther.

On entend par chaine hydrocarbonée non réactive avec les autres constituants une chaine hydrocarbonée pouvant contenir éventuellement des fonctions chimiquement réactives, mais qui ne peuvent réagir avec les autres composants de la composition et de l'alliage selon l'invention.

Dans le cas où aucun des polymères à rendre compatibles ne contient de fonction hydroxyle ou amine, il est recommandé d'associer aux deux composants précédents de la composition un troisième composé 3 de formule :
R₁ - T dans laquelle :
T = OH ou NH₂
et R₁ est une chaine alkyle, linéaire ou ramifiée, de 1 à 20 atomes de carbone, contenant éventuellement au moins un cycle aromatique et/ou au moins un atome d'oxygène, d'azote, de soufre ou d'halogène.

Il est connu que les composés 2 décrits peuvent réagir avec les fonctions carboxyliques ou anhydrides. C'est ainsi que selon le brevet des Etats-Unis d'Amérique 4,331,800 les bisoxazolines sont utilisées pour accroître le degré de polymérisation des polyesters aromatiques. Cet accroissement résulte du couplage de deux chaines par leurs extrémités carboxyliques. Par ailleurs la réaction entre les fonctions anhydrides et oxazolines a été utilisé selon le brevet des Etats-Unis d'Amérique 2,547,495 pour préparer des bis(phtalimidoesters).

C'est ainsi que selon l'art antérieur existe deux types de réaction :
d) 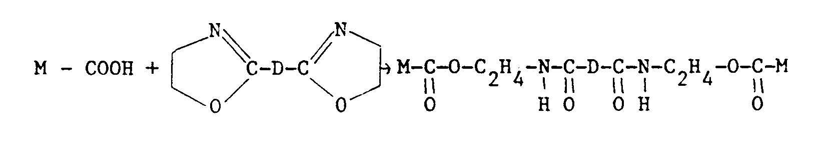 M étant la chaine polymérique
e) 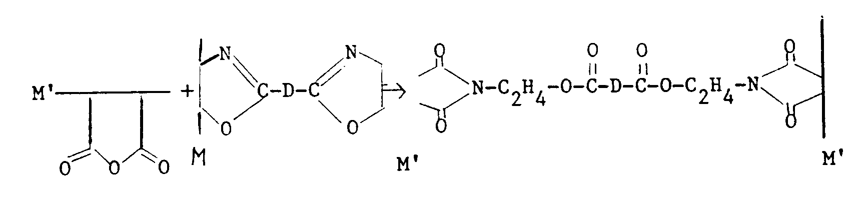 M′ étant encore la représentation de la chaine polymérique.

Ces réactions d'endocouplage n'ont aucun effet sur l'aptitude à rendre compatible deux polymères. D'ailleurs en elle même la bisozaline n'a pas intrinséquement de pouvoir émulgateur.

Le copolymère 1 peut être un copolymère statistique comportant 300 à 50 000 atomes de carbone dans sa molécule. Il résulte de la polymérisation d'un monomère possédant des sites réactifs avec des amines ou des alcools avec d'autres monomères polymérisables radicalairement tels que les oléfines par exemple : l'éthylène, le propylène, le 1-butène, les alkyl(meth)acrylates par exemple : les méthyl,éthyl ou butyl acrylates ou methacrylates, les diènes par exemple : le 1,3-butadiène, l'isoprène ou le 1,4-hexadiène, d'autres comonomères usuels comme : le styrène, le méthylvinyléther, l'acrylonitrile, l'acétate de vinyle, le chlorure de vinyle.

Ce polymère 1 peut encore être un copolymère greffé comportant 300 à 50 000 atomes de carbone. Il résulte du greffage d'un polymère constitué de monomères polymérisables radicalairement, tels ceux cités précédemment, par un monomère possédant des sites réactifs avec des amines ou des alcools. Ce greffage peut se faire par addition thermique sur l'insaturation résiduelle d'un diène comme décrit dans le brevet des Etats-Unis d'Amérique 3,972,961 ou par greffage radicalaire à l'état fondu. Cette dernière méthode préférée consiste à mélanger en extrudeuse un polymère auquel on a ajouté de 500 ppm à 3 % en poids d'anhydride maléique et un amorceur radicalaire, de l'ordre de 250 ppm à 4 % en poids. La décomposition thermique de l'amorceur et le greffage de l'anhydride maléique se font dans l'extrudeuse entre 170 et 250°C et mieux 180 et 200°C. L'anhydride maléique résiduel peut être évacué par dégazage de la matière fondue avant le passage en filière. Le temps de séjour moyen de la matière dans l'extrudeuse est de 15 secondes à 3 minutes et de préférence de 40 à 80 secondes.

Les monomères possédant des sites réactifs avec des amines ou des alcools répondent aux formules générales décrites précédemment en a), b) ou c). Des monomères représentatifs de la formule générale a) sont à titre d'exemple l'anhydride maléique et l'anhydride citraconique. Des monomères représentatifs de la formule générale b) sont, à titre d'exemple, les acides maléique, citraconique, fumarique, mésaconique ou des monoesters de ces acides pour lesquel W est une chaine linéaire ou ramifiée contenant de 1 à 10 atomes de carbone et comportant éventuellement un noyau phényl. Des monomères représentatifs de la formule générale c) sont, à titre d'exemple, des alkényles d'anhydride succinique tels que le 3-allyle ou le 3-isoproprenyle.

Les composés de formule générale 2 sont des dérivés de bisoxazoline ou de bis(5,6-dihydro-1,3 oxazine). Ces composés sont formés par réaction de cyclisation menée sur le diacide correspondant selon des procédés connus, tel que celui décrit par exemple par H. WANKER, Journal of the American Chemical Society, Vol. 60 p. 2152 (1938) ou par R.H. WILEY, Chem. Rev. Vol. 44 p. 447, (1949). Les composés préférés sont la 2,2′bis(2-oxazoline), la 2,2′bis(4,4 diméthyl-2-oxazoline), la 2,2′bis(5,6-dihydro 4H-1,3 oxazine), la phényl 2,2′bis(2-oxazoline), le N,N′-éthylène bis(2-carbamoyl-2-oxazoline) et la N,N′-éthylène bis(2-carbamoyl-5,6-dihydro-4H-1,3 oxazine).

Dans le cas où aucun polymère incompatible ne contient de fonction hydroxyle ou amine, il peut être ajouté à la composition un troisième composant qui est de préférence un alcool gras ou une amine grasse tels que les alcools ou les amines laurique, oléique ou stéarique.

Bien que les composants de la composition puissent être mélangés préalablement à leur introduction dans le mélange de polymères thermoplastiques incompatibles dont un au moins contient des fonctions carboxyliques et dont au moins un autre est compatible avec le copolymère 1, il est préférable, afin de combiner de façon homogène les deux polymères thermoplastiques de les introduire séparément. L'introduction de la composition dans les polymères thermoplastiques s'effectue habituellement par homogénéisation dans un mélangeur des différents composants à l'état fondu. Afin d'obtenir une efficacité optimale de la composition, il est recommandé d'introduire les composants de la composition au mélange de polymères thermoplastiques à l'état fondu, le composé décrit en 2 précédemment étant introduit après le ou les autres constituants de la composition de façon à ce que les fonctions anhydrides se trouvent sous forme d'acide-ester ou d'acide-amide. Dans un premier temps on malaxe les polymères avec le copolymère 1 et éventuellement le composé R₁-T. Au mélange obtenu, de préférence bien homogénéisé, on ajoute le composé 2.

La quantité de copolymère décrit précédemment en 1 introduite dans le mélange de polymères thermoplastiques incompatibles est d'environ de 0,1 à 10 % et mieux de 1 à 5 % en poids par rapport au poids de mélange des polymères thermoplastiques. La quantité de composé 2 associé à la composition est telle que le rapport molaire des fonctions oxazolines ou 4,5-dihydro-1,3 oxazine sur les fonctions actives du copolymère 1 ou de ces fonctions actives après réaction avec le composé 3 telles que anhydrides, acide-esters, acides, ou acide-amides, est compris entre 0,1 et 10 et mieux entre 1 et 3.

Dans le cas où le composé 3 est introduit, la quantité incorporée est telle que le rapport molaire des fonctions alcools ou amines sur les fonctions actives du copolymère 1 est compris entre 0,1 et 10 et mieux entre 1 et 3.

La compatibilité engendrée par la composition selon l'invention est mise en évidence par microscopie électronique du produit résultant du mélange des polymères thermoplastiques incompatibles.

La morphologie d'un mélange de polymères thermoplastiques incompatibles sans agent de compatibilité se présente, sous microscope électronique, sous forme de gros nodules d'un des polymères inclus dans la matrice constituée par l'autre polymère. L'adhésion entre les nodules et la matrice est inexistante. L'addition aux polymères de la composition selon l'invention provoque une diminution significative de la taille des nodules. On observe en outre une augmentation de l'adhésion entre les phases visible par un recouvrement des nodules par la matrice. Il se forme dans ces conditions ce qu'on peut appeler un alliage, par assimilation aux structures métallurgiques, se différenciant des mélanges.

Il est connu que l'accroissement de la dispersion et surtout de l'adhésion nodules-matrice améliore les propriétés mécaniques : G. MAGLIO - R. PALUMBO, "Polymer Blends" Col. 2 p. 41 Ed. PLENUM 1984. En outre l'incorporation de la composition confère un meilleur étirage des polymères à l'extrusion, une diminution du gonflement en sortie de filière et du délaminage de l'extrudat observé à la granulation.

De façon non limitative, les polymères thermoplastiques contenant des fonctions carboxyliques peuvent être choisis parmi les polyesters tels que le polybutylène téréphtalate ou le polyéthylène téréphtalate, les polyamides tels que les polyamides 6,11 ou 12, les copolymères statistiques avec l'acide acrylique ou méthacrylique, tels que les copolymères éthylène-acide acrylique.

Les polymères thermoplastiques entrant dans la composition de l'alliage et ne comportant pas de fonctions carboxyliques peuvent être issus de monomères éthyléniquement insaturés tels que le styrène, le propylène, l'éthylène, éventuellement copolymérisés avec d'autres monomères tels qu'une alphaoléfine comme l'octène, l'hexène, le butène, ou tels que l'acétate de vinyle, l'acrylate d'éthyle ou de méthyle.

Grâce à la composition selon l'invention incorporée, en quantités données précédemment, à des mélanges de polymères thermoplastiques incompatibles, il est possible de réaliser de nouveaux alliages de polymères thermoplastiques tels que les alliages d'au moins une des résines suivantes : polypropylène, polystyrène, copolymère acrylonitrile-butadiène-styrène, copolymère styrène-acrylonitrile, polyphényloxyde, polyéthylène, copolymère éthylène-acétate de vinyle, polyfluorure de vinylidène, polyméthacrylate de méthyle, copolymère EPM, copolymère EPDM, polyméthylpentène, polysulfure de phénylène (PPS),
avec au moins une des résines incompatibles suivantes : polyamide ou copolyamide 6,11,12,6-10,6-6 ou 6-9, polyétheresteramide, polybutylène téréphtalate, polyéthylène téréphtalate, copolymère éthylène-acide acrylique, polyamides amorphes semi aromatiques tels que ceux décrits par exemple dans les brevets français 1 588 130 et 2 324 672, européen 53 876 et japonais 60.217237, polyesters aromatiques à base d'acide hydroxybenzoïque, de diacides aromatiques et de diphénols tels que ceux décrits dans les brevets américain 4.067.852 et belge 4.184.996, polyarylates, polycarbonate.

Les exemples suivants illustrent l'invention sans toutefois la limiter.

Préalablement on prépare dans les conditions ci-après de la 2,2′-bis(2-oxazoline), de la 1,4-bis(5′,6′-dihydro-4′H-1′,3′-oxazine -2′yle)benzène, du propylène maléisé.

### -Préparation de la 2,2′-bis(2-oxazoline)

Dans un ballon de deux litres sont introduits sous agitation et balayage d'azote, 146 g. d'oxalate d'éthyle et 200 cm³ de dichlorométhane. On ajoute à température ambiante, 122 g. d'éthanolamine puis on laisse réagir pendant une heure. La diéthanoloxamide obtenue est isolée par filtration et séchée. 160 g. de ce produit sont dissous dans 900 cm³ de toluène, additionnés de 205 cm³ de SOCl₂, et chauffés à 70°C pendant 9 heures. Le mélange obtenu filtré, lavé à l'éthanol puis à l'eau bouillante et recristallisé dans de l'éthoxy-2-éthanol. 127 g. du produit précédent et 78,5 g. d'une solution de potasse à 85 % sont dissous dans 1,2 l. de méthanol puis porté au reflux pendant 2 heures. Après filtration, la phase organique est évaporée à sec et le produit est recristallisé dans du toluène. Le produit obtenu est de la 2,2′-bis(2-oxazoline). Le pka du diacide correspondant à cette bisoxazoline : l'acide oxalique est de 1,2.

### -Préparation de la 1,4-bis(5′,6′-dihydro-4′H-1′,3′-oxazine-2′yle) benzène

La synthèse de ce produit se fait selon le procédé décrit dans le brevet allemand 2.153.513 à partir de diméthyltéréphtalate et de 3-aminopropanol. Après réaction on obtient un produit blanc cristallisé dont le point de fusion est de 221°C. Les dosages microanalytiques du carbone, de l'hydrogène et de l'azote donnent respectivement 66,77 %, 6,59 %, 11,05 %. Le pka du diacide correspondant à cette bisoxazine hydrogénée : acide téréphtalique est de 3,5.

### -Greffage du polypropylène par l'anhydride maléique en solution (A)

Dans un ballon de 25 litres on introduit 5 litres de chlorobenzène, 1200 g. de polypropylène (3020 GN3 de la Société APPRYL) et 200 g. d'anhydride maléique. Le tout est porté à 125°C puis on ajoute 216 g. de peroxyde (Lucidol CH 50) en 2 heures.

A la fin de cette introduction, on maintient l'ensemble à 125°C pendant 30 minutes, puis on refroidit à 90°C et on injecte 10 litres d'acétone en trente minutes. Le produit précipité est lavé à l'acétone afin d'extraire l'anhydride maléique libre, puis séché sous vide à 80°C pendant 6 heures. On obtient un polypropylène greffé par 6,6 % poids d'anhydride maléique.

### -Greffage du polypropylène par l'anhydride maléique, à l'état fondu (B)

Dans une extrudeuse ZSK30 (de la Société WERNER) on incorpore en continu, un mélange de 100 parts de polypropylène (3050 MN4 de la Société APPRYL), 1,5 part d'anhydride maléique et 1,7 part de 2,5 diméthyl-2,5-diterbutylperoxyde hexane dissous dans une part de chlorobenzène.

La température des composants est de 200°C et la vitesse de rotation de la vis de 100 tours/minute. On procède à une dévolatilisation avant la filière, afin d'extraire le chlorobenzène et l'anhydride maléique non réagi. On obtient un polypropylène greffé à 1 % poids d'anhydride maléique.

### EXEMPLE 1 - Alliage polypropylène-polybutylène téréphtalate (PBT)

### a) mélange témoin

50 parts de polypropylène (3050 MN1 de la Société APPRYL) et 50 parts de PBT (ORGATER TMNO de la Société ATOCHEM) sont malaxés à 250°C pendant 30 minutes dans la cuve d'un plastographe HAAKE (ECHANTILLON 1).

L'examen morphologique par microscopie électronique à balayage sur une fracture cryogénique indique l'existence de nodules de PBT de 14 microns et une mauvaise adhésion entre ces nodules et la matrice polypropylène.

### b) Mélange compatibilisé par du polypropylène maléisé

Le mélange témoin précédent est additionné de 0,4 ; 0,6 ; 1 ; 2 et 3 parts (respectivement ECHANTILLONS 2, 3, 4, 5, 6) de polypropylène greffé (A) pour l'Echantillon 4 et (B) pour les autres Echantillons et malaxé dans les conditions précédentes. La morphologie de ces mélanges est constituée de nodules de PBT de 4 à 6 microns.

### c) Mélange malaxé en présence de bisoxazoline

Le mélange témoin précédent (a) est additionné de 0,6 part de 2,2′-bis(2-oxazoline) et malaxé dans les conditions précédentes (ECHANTILLON 7). Le produit obtenu est constitué de nodules de PBT de 17 à 18 microns. La comparaison de cet Echantillon avec les Echantillons 1 et 4 montre que la 2,2′-bis(2-oxazoline) n'a pas de pouvoir intrinsèque de compatibilité.

### d) Alliage obtenu selon l'invention

Le mélange témoin précédent (a) est additionné de 1 part de polypropylène maléisé (A) et malaxé à 250°C. Après 15 minutes de malaxage, on ajoute 0,6 part de 2,2′-bis(2-oxazoline) et on malaxe 15 minutes de plus (ECHANTILLON 8). La morphologie de cet alliage est constitué de nodules de PBT de 2,5 microns dont l'adhésion avec la matrice est excellente. On peut évaluer la qualité de l'adhésion entre les nodules et la matrice en comptabilisant le pourcentage de nodules excavés lors de la fracture cryogénique préalable à l'examen morphologique. Ce pourcentage est de 48 dans le cas de l'Echantillon 4 et de 38 dans le cas de l'Echantillon 8.

La diminution de la taille des nodules et l'amélioration de l'adhésion matrice-nodules reflètent la meilleure efficacité de la composition pour rendre compatibles le propylène et le PBT.

Le graphique ci-dessous montre le diamètre des nodules de PBT, mesuré par examen morphologique des Echantillons, en fonction du nombre de parts de polypropylène greffé additionnées au mélange. Les chiffres entre parenthèses correspondent aux numéros des Echantillons.

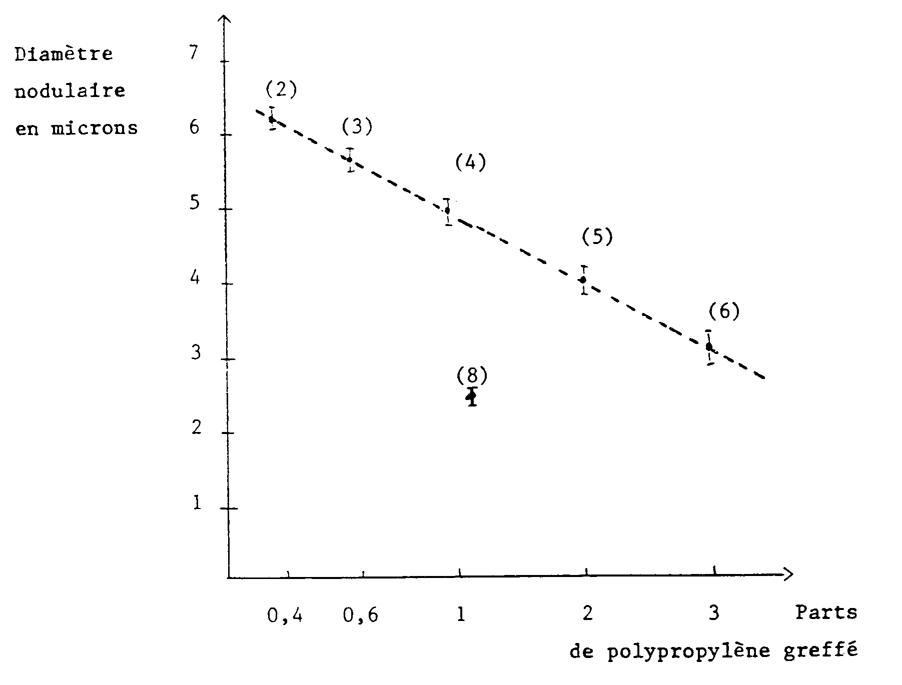

### EXEMPLE 2

On malaxe à 250°C pendant 30 minutes dans la cuve d'un plastographe Haake, avec une vitesse de rotation des pales de 50 tours/minute, les mélanges suivants :
a) 50 parts de polypropylène (3050 MN1 de la Société APPRYL) et 50 parts de polyamide 6 (orgamide de la Société ATOCHEM) : ECHANTILLON 9
b) les constituants précédents auxquels on ajoute 1 part de polypropylène greffé (A) : ECHANTILLON 10
c) les constituants du mélange a) auxquels on ajoute 1 part de polypropylène greffé (A) et, après 15 minutes de malaxage, 0,6 part de 2,2′-bis(2-oxazoline) : ECHANTILLON 11
Ces trois alliages sont examinés par microscopie électronique à balayage. Les morphologies présentent des nodules de polypropylène dispersés dans une matrice de polyamide, caractérisés par leur diamètre et leur adhésion avec la matrice. Les observations sont résumées dans le tableau ci-dessous

| | Diamètre des nodules en microns | Adhésion entre les nodules et la matrice |
|---|---|---|
| ECHANTILLON 9 | 14 | nulle |
| ECHANTILLON 10 | 3,3 | nulle |
| ECHANTILLON 11 | 1,6 | bonne |

### EXEMPLE 3

Dans la cuve d'un plastographe Haake, on malaxe les mélanges suivants à 260°C pendant 30 minutes, la vitesse de rotation des pales étant de 50 tours/minute :
a) 50 parts de polystyrène (Lacqrène 1160c de la Société ATOCHEM) et 50 parts de polybutylène téréphtalate (ORGATER TMNO de la Société ATOCHEM) : ECHANTILLON 12
b) les constituants précédents auxquels on ajoute 1 part d'un copolymère styrène-anhydride maléique qui comporte 8 % en poids d'anhydride maléique (Dylark 700 de la Société ARCO) : ECHANTILLON 13
c) les constituants du mélange précédent b) auxquels on incorpore, après 15 minutes de malaxage, 0,5 part de 2,2′-bis(2-oxazoline) : ECHANTILLON 14
Les morphologies de ces trois alliages sont caractérisés par les nodules de polypropylène dispersés dans une matrice de polybutylène téréphtalate. Les diamètres de ces nodules et la qualité de leur adhésion avec la matrice sont regroupés dans le tableau suivant

| | Diamètre des nodules en microns | Adhésion entre les nodules et la matrice |
|---|---|---|
| ECHANTILLON 12 | 37 | nulle |
| ECHANTILLON 13 | 6,4 | bonne |
| ECHANTILLON 14 | 3,9 | bonne |

### EXEMPLE 4

Dans la cuve d'un plastographe Haake, on malaxe les mélanges suivants à 250°C pendant 30 minutes, la vitesse de rotation des pales étant de 50 tours/minute :
a) 50 parts d'une polyéthylène haute-densité d'indice fusion (Melt Index) de 7 (PEHD 2070 MN60 de la Société ATOCHEM) et 50 parts de polybutylène téréphtalate (ORGATER TMNO de la Société ATOCHEM) : ECHANTILLON 15
b) les constituants précédents a) auxquels sont ajoutées 5 parts d'un terpolymère éthylène-acétate de vinyle-anhydride maléique dont les teneurs en acétate de vinyle et en anhydride maléique sont de 14 % et 0,385 % (OREVAC 9307 de la Société ATOCHEM) : ECHANTlLLON 16
c) les constituants précédents (mélange b) auxquels on additionne, après 15 minutes de malaxage, 0,5 part de 2,2′-bis(2-oxazoline) : ECHANTILLON 17.

Ces trois échantillons ont été observés en microscopie électronique à balayage. La taille des nodules de PBT et leur adhésion avec la matrice de PE sont regroupées dans le tableau suivant :

| | Diamètre des nodules en microns | Adhésion entre les nodules et la matrice |
|---|---|---|
| ECHANTILLON 15 | 5,4 | nulle |
| ECHANTILLON 16 | 3,1 | moyenne |
| ECHANTILLON 17 | 2,5 | moyenne |

### EXEMPLE 5

Dans la cuve d'un plastographe Haake, on malaxe les mélanges suivants à 270°C, pendant 30 minutes, la vitesse de rotation des pales est de 50 tours/minute
a) 50 parts de polypropylène (PP 3050 MN1 de la Société ATOCHEM) et 50 parts de polyéthylène téréphtalate (PET) : ECHANTILLON 18
b) les constituants précédents (mélange a) auxquels est ajoutée 1 part de polypropylène greffé (A) : ECHANTILLON 19
c) les constituants précédents (mélange b) auxquels on incorpore, après 15 minutes de malaxage, 0,5 part de 2,2′bis(2-oxazoline) : ECHANTILLON 20

La morphologie de ces alliages est constituée de nodules de PET dispersés dans une matrice de PP. Les diamètres des nodules et la qualité de l'adhésion nodules/matrice sont répertoriés dans le tableau ci-dessous :

| | Diamètre des nodules en microns | Adhésion entre les nodules et la matrice |
|---|---|---|
| ECHANTILLON 18 | 20 | nulle |
| ECHANTILLON 19 | 3 | très bonne |
| ECHANTILLON 20 | 2,2 | très bonne |

### EXEMPLE 6

Dans la cuve d'un plastographe Haake, on malaxe les mélanges suivants à 220°C, pendant 30 minutes avec une vitesse de rotation des pales de 50 tours/minute :
a) 60 parts de polypropylène (PP 3050 MN1 de la Société ATOCHEM) et 40 parts de copolymère éthylène-acide acrylique (EAC) dont la teneur en acide acrylique est de 8 % poids et l'indice de fusion (Melt Index) est de 5,5, à 190°C, sous 2,16 kg (DOW 499) : ECHANTILLON 21
b) les constituants précédents (mélange a) auxquels on ajoute 1 part de polypropylène greffé (A) : ECHANTILLON 22
c) les constituants du mélange b) auxquels on ajoute 0,5 part de 2,2′bis(2-oxazoline) après 15 minutes de malaxage : ECHANTILLON 23
d) les constituants du mélange a) auxquels on ajoute 0,889 part de polypropylène greffé (A), 0,111 part de dodécanol puis, après 15 minutes de malaxage, 0,5 part de 2,2′bis(2-oxazoline) : ECHANTILLON 24
Les morphologies de ces échantillons présentent des nodules de EAC dispersés dans une matrice de polypropylène.

Les diamètres de ces nodules et leur adhésion avec la matrice sont répertoriés dans le tableau suivant :

| | Diamètre des nodules en microns | Adhésion entre les nodules et la matrice |
|---|---|---|
| ECHANTILLON 21 | 11 | nulle |
| ECHANTILLON 22 | 2,4 | moyenne |
| ECHANTILLON 23 | 1,3 | très bonne |
| ECHANTILLON 24 | 0,9 | très bonne |

### EXEMPLE 7

On réalise un mélange témoin dans les conditions de l'Exemple la : ECHANTILLON 25.

Le mélange précédent est additionné de 1 part de polypropylène greffé (A) et malaxé à 250°C pendant 30 minutes dans la cuve du plastographe HAAKE : ECHANTILLON 26.

Le mélange témoin précédent est additionné de 1 part de polypropylène maléisé (A) et malaxé à 250°C dans la cuve du plastographe HAAKE. Après 15 minutes de malaxage on ajoute 0,6 part de 1,4-bis(5′,6′-dihydro-4′H-1′3′-oxazine-2′-yle)benzène et on malaxe 15 minutes de plus : ECHANTILLON 27.

Les morphologies de ces alliages sont examinés sous microscope électronique à balayage.

L'ECHANTILLON 25 présente des nodules de PBT dont le diamètre est de 14 microns et dont l'adhésion est nulle avec la matrice de polypropylène.

Pour l'ECHANTILLON 26, le diamètre des nodules est de 5 microns et l'adhésion nodules-matrice est bonne.

Pour l'ECHANTILLON 27, le diamètre des nodules est de 3,2 microns et l'adhésion nodules-matrice est bonne.

L' incorporation de bisoxazine hydrogénée provoque une diminution du diamètre nodulaire.

## Revendications

1. Composition permettant de rendre compatibles au moins deux polymères thermoplastiques incompatibles dont un du moins contient dans sa molécule des fonctions carboxyliques et un au moins n'en contient pas caractérisée en ce qu'on associe une bisoxazoline ou une bisoxazine hydrogénée à un polymère maléisé compatible avec les polymères ne possédant pas de fonction carboxylique.

2. Composition selon la revendication 1 caractérisée en ce qu'on associe : un copolymère 1, contenant dans sa molécule le reste d'au moins un des monomères de formules suivantes :
a) 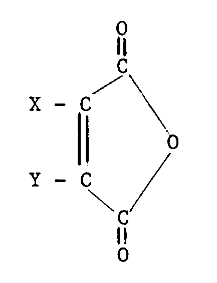 dans laquelle X et Y sont soit un proton, soit une chaine contenant de 1 à 8 atomes de carbone, étant entendu que l'un des deux est un proton
b) 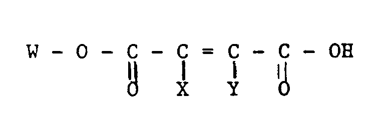 dans laquelle W est soit un proton, soit une chaine alkyle, linéaire ou ramifiée contenant de 1 à 10 atomes de carbone
c) 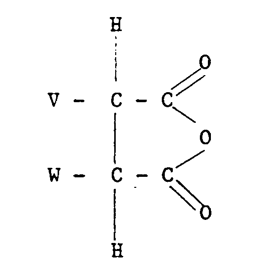 dans laquelle W est tel que défini précédemment et V est un groupement hydrocarboné, linéaire ou ramifié, contenant de 2 à 12 atomes de carbone et contenant une insaturation éthylénique
un composé 2 de formule : 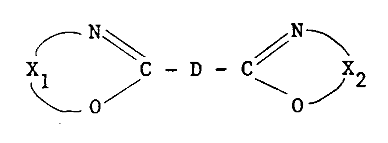 dans laquelle D est soit zéro, soit une chaine alkyle, contenant éventuellement au moins un cycle aromatique et/ou au moins un atome d'oxygène, d' azote, de soufre, d'halogène, ladite chaine étant telle que le diacide correspondant 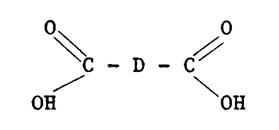 possède un pka inférieur à 4,5
X₁ et X₂, identiques ou différents, représentent une chaine hydrocarbonée non réactive avec les autres constituants contenant de 2 ou 3 atomes de carbone dans le cycle imino-éther.

3. Composition selon l'une des revendications 1 ou 2 caractérisée en ce que dans le cas où aucun des polymères à rendre compatibles ne contient de fonction hydroxyle ou amine on associe à la composition un composé 3 de formule R₁ - T dans laquelle :
T = OH ou NH₂
et R₁ est une chaine alkyle, linéaire ou ramifiée, de 1 à 20 atomes de carbone, contenant éventuellement au moins un cycle aromatique et/ou au moins un atome d'oxygène, d'azote, de soufre, d'halogène.

4. Composition selon la revendication 3 caractérisée en ce que le composé R₁ - T est choisi parmi les amines grasses ou les alcools gras.

5. Composition selon l'une des revendications 1 à 4 caractérisée en ce que la quantité du composé 2 associé à la composition est telle que le rapport molaire des fonctions oxazolines ou 4,5-dihydro 1,3 oxazine sur les fonctions actives du copolymère 1 ou de ces fonctions actives après réaction avec le composé 3 est compris entre 0,1 et 10.

6. Composition selon l'une des revendications 1 à 5 caractérisée en ce que la quantité de composé 3 R₁ - T introduite est telle que le rapport molaire des fonctions alcools ou amines sur les fonctions actives du copolymère 1 est compris entre 0,1 et 10.

7. Procédé permettant de rendre compatibles au moins deux polymères thermoplastiques incompatibles dont un au moins contient dans sa molécule des fonctions carboxyliques et un au moins n'en contient pas par mélangeage à l'état fondu caractérisé en ce qu'on incorpore au mélange une composition selon l'une des revendications 1 à 6.

8. Procédé selon la revendication 7 caractérisé en ce qu'au mélange des polymères à l'état fondu on incorpore préalablement le copolymère 1, et éventuellement le composé de formule R₁ - T, avant d'introduire dans le mélange le composé 2.

9. Procédé selon l'une des revendications 7 ou 8 caractérisé en ce que la quantité de copolymère 1 introduit dans le mélange de polymères thermoplastiques incompatibles est d'environ 0,1 à 10 % en poids par rapport au poids de mélange desdits polymères.

10. Alliages de polymères thermoplastiques contenant la composition selon l'une des revendications 1 à 6.

11. Alliage selon la revendication 10 comprenant au moins une des résines suivantes : polypropylène, polystyrène, copolymère acrylonitrile-butadiène-styrène, copolymère styrène-acrylonitrile, polyphényloxyde, polyéthylène, copolymère éthylène-acétate de vinyle, polyfluorure de vinylidène, polyméthacrylate de méthyle, copolymère EPM, copolymère EPDM, polyméthylpentène, polysulfure de phénylène (PPS),
avec au moins une des résines incompatibles suivantes : polyamide ou copolyamide 6,11,12,6-10,6-6 ou 6-9, polyétheresteramide, polybutylène téréphtalate, polyéthylène téréphtalate, copolymère éthylène-acide acrylique, polyamides amorphes semi aromatiques, polyesters aromatiques à base d'acide hydroxybenzoïque, de diacides aromatiques et de diphénols, polyarylates, polycarbonate.

## Claims

1. Composition making it possible to render compatible at least two incompatible thermoplastic polymers at least one of which contains carboxylic functional groups in its molecule and at least one of which does not contain any, characterised in that a bisoxazoline or a hydrogenated bisoxazine is used in combination with a maleinised polymer compatible with the polymers which do not contain any carboxylic functional group.

2. Composition according to Claim 1, characterised in that the following are used in combination:
a copolymer 1, containing in its molecule the residue of at least one of the monomers of the following formulae:
a) 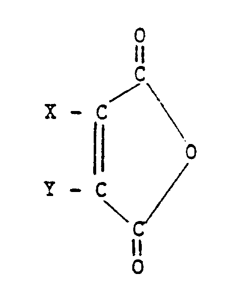 in which X and Y are either a proton or a chain containing from 1 to 8 carbon atoms, it being understood that one of the two is a proton
b) 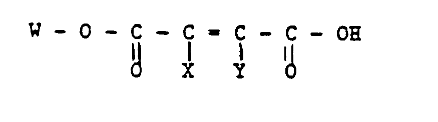 in which W is either a proton or a linear or branched alkyl chain containing from 1 to 10 carbon atoms
c) 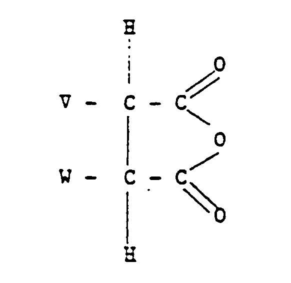 in which W is as defined above and V is a linear or branched hydrocarbon group containing from 2 to 12 carbon atoms and containing an ethylenic unsaturation
a compound 2 of formula: 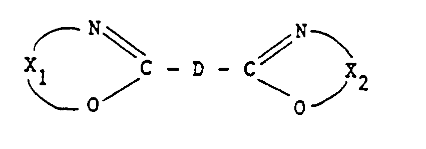 in which D is either zero or an alkyl chain optionally containing at least one aromatic ring and/or at least one oxygen, nitrogen, sulphur or halogen atom, the said chain being such that the corresponding diacid 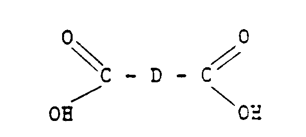 has a pka lower than 4.5
X₁ and X₂, which are identical or different, denote a hydrocarbon chain which is not reactive with the other constituents, containing 2 or 3 carbon atoms in the iminoether ring.

3. Composition according to either of Claims 1 and 2, characterized in that in the case where none of the polymers to be made compatible contains any hydroxyl or amine functional group the composition is used in combination with a compound 3 of formula R₁-T in which:
T = OH or NH₂
and R₁ is a linear or branched alkyl chain of 1 to 20 carbon atoms, optionally containing at least one aromatic ring and/or at least one oxygen, nitrogen, sulphur or halogen atom.

4. Composition according to Claim 3, characterized in that the compound R₁-T is chosen from fatty amines or fatty alcohols.

5. Composition according to one of Claims 1 to 4, characterised in that the quantity of the compound 2 used in combination with the composition is such that the molar ratio of the oxazoline or 4,5-dihydro-1,3-oxazine functional groups to the active functional groups of the copolymer 1 or of these active functional groups after reaction with the compound 3 is between 0.1 and 10.

6. Composition according to one of Claims 1 to 5, characterised in that the quantity of compound 3 R₁-T which is introduced is such that the molar ratio of the alcohol or amine functional groups to the active functional groups of the copolymer 1 is between 0.1 and 10.

7. Process making it possible to render compatible at least two incompatible thermoplastic polymers at least one of which contains carboxylic functional groups in its molecule and at least one of which does not contain any, by mixing in the molten state, characterised in that a composition according to one of Claims 1 to 6 is incorporated into the mixture.

8. Process according to Claim 7, characterised in that the copolymer 1 and optionally the compound of formula R₁-T are incorporated beforehand into the mixture of the polymers in the molten state before the compound 2 is introduced into the mixture.

9. Process according to either of Claims 7 and 8, characterized in that the quantity of copolymer 1 introduced into the mixture of incompatible thermoplastic polymers is from approximately 0.1 to 10 % by weight relative to the weight of the mixture of the said polymers.

10. Thermoplastic polymer blends containing the composition according to one of Claims 1 to 6.

11. Blend according to Claim 10, comprising at least one of the following resins:
polypropylene, polystyrene, acrylonitrile-butadiene-styrene copolymer, styrene-acrylonitrile copolymer, polyphenyl oxide, polyethylene, ethylene-vinyl acetate copolymer, polyvinylidene fluoride, polymethyl methacrylate, EPM copolymer, EPDM copolymer, polymethylpentene, polyphenylene sulphide (PPS),
with at least one of the following incompatible resins:
polyamide or copolyamide 6,11,12,6-10,6-6 or 6-9, polyetheresteramide, polybutylene terephthalate, polyethylene terephthalate, ethylene-acrylic acid copolymer, semi-aromatic amorphous polyamides, aromatic polyesters based on hydroxybenzoic acid, on aromatic diacids and on diphenols, polyarylates, polycarbonate.

## Patentansprüche

1. Zusammensetzung zum kompatibel machen von wenigstens zwei inkompatiblen thermoplastischen Polymeren, wobei wenigstens eines in seinem Molekül Carboxylfunktionen und wenigstens eines keine davon enthält, dadurch gekennzeichnet, daß man ein Bisoxazolin oder ein hydriertes Bisoxazolin mit einem Polymer auf Basis von Maleinsäure, welches verträglich mit Polymeren welche keine Carboxylgruppen besitzen, ist, zusammenlagert.

2. Zusammensetzung nach Anspruch 1, dadurch gekennzeichnet, daß man kondensiert: ein Copolymer 1, enthaltend in seinem Molekül den Rest wenigstens eines der Monomere der folgenden Formel:
a) 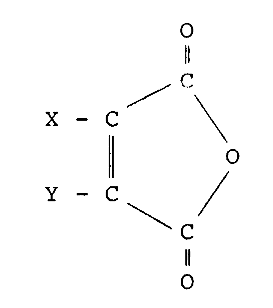 wobei X und Y entweder Wasserstoff oder eine Kette mit 1 bis 8 Kohlenstoffatomen ist, wobei wenigstens eines der beiden Atome Wasserstoff ist,
b) 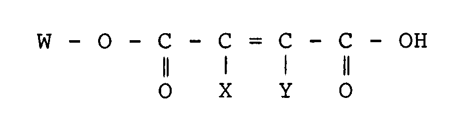 wobei W entweder Wasserstoff oder eine lineare oder verzweigte Alkylkette mit 1 bis 10 Kohlenstoffatomen ist,
c) 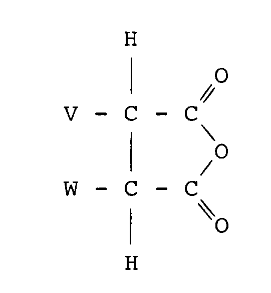 wobei W die vorstehend genannte Bedeutung hat und V ein linearer oder verzweigter Kohlenwasserstoffrest ist, der 2 bis 12 Kohlenstoffatome und eine ethylenische Doppelbindung enthält und
eine Verbindung 2 der Formel: 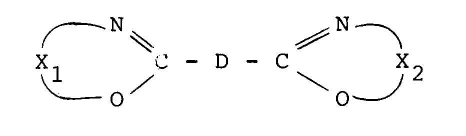 wobei D entweder Null oder eine Alkylkette ist, die gegebenenfalls wenigstens einen aromatischen Ring und/oder wenigstens ein Sauerstoff-, Stickstoff-, Schwefel-, Halogenatom enthält, wobei besagte Kette derart ausgestaltet ist, daß die entsprechende Disäure 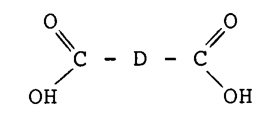 einen pKₐ-Wert von weniger als 4,5 aufweist, X₁ und X₂ gleich oder verschieden sind und eine Kohlenwasserstoffkette aufweisen, die nicht mit den anderen Bestandteilen reagiert und 2 oder 3 Kohlenstoffatome im cyclischen Iminoether enthält.

3. Zusammensetzung nach einem der Ansprüche 1 oder 2, dadurch gekennzeichnet, daß in dem Falle wo jedes der Polymere, das kompatibel gemacht werden soll, keine Hydroxyl- oder Aminogruppen enthält, man der Zusammensetzung einer Verbindung 3 der Formel R₁ - T, in der
T = OH oder NH₂ und
R₁ eine lineare oder verzweigte Alkylkette mit 1 bis 20 Kohlenstoffatomen ist, die gegebenenfalls wenigstens einen aromatischen Ring und/oder wenigstens ein Sauerstoff-, Stickstoff-, Schwefel-, oder Halogenatom enthält.

4. Zusammensetzung nach Anspruch 3, dadurch gekennzeichnet, daß die Verbindung R₁ - T ausgewählt ist aus Fettaminen oder Fettalkoholen.

5. Zusammensetzung nach einem der Ansprüche 1 bis 4, dadurch gekennzeichnet, daß die Menge der Verbindung 2, die mit der Zusammensetzung zusammengelagert wird, so gewählt ist, daß das molare Verhältnis der Oxazolingruppen oder des 4,5-Dihydro-1,3- oxazins, bezogen auf die aktiven Gruppen des Copolymers 1 oder dessen aktive Gruppen nach der Reaktion mit der Verbindung 3, von 0,1 bis 10 beträgt.

6. Zusammensetzung nach einem der Ansprüche 1 bis 5, dadurch gekennzeichnet, daß die Menge der eingeführten Verbindung 3 R₁ - T einem molaren Verhältnis der Alkohol- oder Aminfunktionen, bezogen auf die aktiven Funktionen des Copolymers 1, zwischen 0,1 und 10 beträgt.

7. Verfahren zum kompatibel machen wenigstens zweier inkompatibler thermoplastischer Polymere, bei denen wenigstens eines in seinem Molekül Carboxylfunktionen enthält und wenigstens eines keine davon enthält, durch Mischen in geschmolzenem Zustand, dadurch gekennzeichnet, daß man der Mischung eine Zusammensetzung nach einem der Ansprüche 1 bis 6 zusetzt.

8. Verfahren nach Anspruch 7, dadurch gekennzeichnet, daß man der Polymermischung im Schmelzzustand zunächst das Copolymer 1, und gegebenenfalls eine Verbindung der Formel R₁ - T und daraufhin die Verbindung 2 der Mischung zusetzt.

9. Verfahren nach einem der Ansprüche 7 oder 8, dadurch gekennzeichnet, daß die Menge des Copolymers 1, welches der inkompabiblen thermoplastischen Polymermischung zugeführt wird, ungefähr 0,1 bis 10 Gew.%, bezogen auf das Gewicht der Mischung, besagter Polymere beträgt.

10. Thermoplastische Legierung enthaltend die Zusammensetzung nach einem der Ansprüche 1 bis 6.

11. Legierung gemäß Anspruch 10, enthaltend wenigstens eines der folgenden Harze:
Polypropylen, Polystyrol, Acrylnitril-Butadien-Styrol-Copolymere, Styrol- Acrylnitril-Copolymere, Polyphenylenoxide, Polyethylen, Ethylen-Vinylacetat-Copolymere, Polyvinylidenfluoride, Polymethylmethacrylat,EPM-Copolymere, EPDM-Copolymere, Polymethylpenten, Polyphenylensulfide(PPS),
mit wenigstens einem folgender inkompatibler Harze: Polyamid oder Copolyamide der Typen 6,11,12,6-10,-6-6 oder 6-9, Polyetheresteramide, Polybutylenterephthalat, Polyethylenterephthalat, Ethylen-Acrylsäure-Copolymerisat, halbaromatische amorphe Polyamide, aromatische Polyester auf Basis von Hydroxybenzoesäuren, aromatischen Dicarbonsäuren und Diphenolen, Polyacrylaten, Polycarbonat.
